# EUROPÄISCHE PATENTANMELDUNG

(11) **EP 1 039 217 A1**
(43) Veröffentlichungstag der Anmeldung: **27.09.2000**
(21) Anmeldenummer: 00810245.1
(22) Anmeldetag: 22.03.2000
(51) Int. Cl.: F21V 8/00

(54) **Leuchtkörperaufbau**

(30) Priorität: 24.03.1999 CH 55899
(71) Anmelder: Staufert, Gerhard, 4800 Zofingen (CH)
(72) Erfinder: Staufert, Gerhard, 4800 Zofingen (CH)

(57) **Zusammenfassung**

Ein erfindungsgemässer Leuchtkörperaufbau ist so ausgebildet, dass das Licht einer oder mehrerer, nahe des Zentrums des Leuchtkörperautbaus angeordneten Lichtquelle ( 3 ) zu einem möglichst grossen Teil in klar transparente, planen- bzw. schalenförmige, lichtleitende Körper ( 1 ) einkoppelt und zu mindestens einer - bezüglich des gesamten Leuchtkörperautbaus peripher gelegenen - Kante wieder auskoppelt. Auf dem Weg von der Lichteintrittszone ( 5 ) zu der als Lichtaustrittszone ( 6 ) wirkenden Kante tritt vorzugsweise kein Licht aus den klar transparenten, lichtleitenden Körpern ( 1 ) aus, womit dieselben dem Betrachter als nur an definierten Stellen der Kanten leuchtende und Licht abstrahlende, ansonsten nahezu körperlose Gebilde erscheinen. Durch eine entsprechende Gestaltung der Lichteintritts- und/oder Lichtaustrittszone ( 5, 6 ) ist die Qualität des austretenden Lichtes hinsichtlich Abstrahlwinkelbereich, Diffusion und Farbe in einem weiten Bereich einstellbar. In der Richtung der Dicke der lichtleitenden Körper ( 1 ) wird die Lichtquelle von Abdeckkörpem ( 7, 9 ) so abgedeckt, dass kein Licht in dieser Richtung aus dem Leuchtkörperaufbau austritt.

## Beschreibung

Die Erfindung betrifft einen Leuchtkörperaufbau nach dem Oberbegriff des Patentanspruches 1 mit lichtleitenden, transparenten, platten- beziehungsweise schalenförmigen Körpern, welcher zentral in die lichtleitenden Körper eingekoppeltes Licht an den - bezüglich des Leuchtkörperaufbaus - peripher gelegenen Kanten wieder abstrahlt. Aus den Flächen der lichtleitenden, transparenten, platten- beziehungsweise schalenförmigen Körper tritt kein Licht aus, wodurch dieselben dem Betrachter als nur an definierten Stellen der Kanten leuchtende, ansonsten nahezu körperlose Gebilde erscheinen.

Die vorliegende Erfindung geht von folgendem Anforderungskatalog aus:
1. Der Leuchtkörperaufbau soll dem Betrachter weitestgehend als klar transparentes, nahezu körperloses Gebilde erscheinen. Die Forderung nach Transparenz und "Körperlosigkeit" zielt nicht nur auf ästhetische Aspekte, sondern ermöglicht den Einsatz des Leuchtkörperaufbaus an Orten an denen ein nicht transparenter Aufbau, der die Dimension von einigen wenigen cm überschreitet, die freie Sicht behindern würde.
2. Der Leuchtkörperaufbau soll sehr flach - d.h. in einer räumlichen Richtung eine geringe Bauhöhe aufweisend - ausgebildet werden können. Die Forderung nach einer flachen Bauweise wird hier so definiert, dass der Leuchtkörperaufbau in zwei räumlichen Richtungen die Dimension von einigen 100 mm aufweisen darf, dass in der dritten Richtung jedoch die Bauhöhe nur lokal beschränkt einen Wert von 20 mm überschreiten und die lokale maximale Bauhöhe keinesfalls grösser als ca. 50 mm sein darf. Auch diese Forderung nach einer flachen Bauweise leitet sich nicht nur aus gestalterischen Gründen ab, sondern beinhaltet den Vorteil, dass der Leuchtkörperaufbau an Stelle von Einbauleuchten verwendet werden kann, wenn er in unmittelbarer Nähe einer Wand oder einer Decke montiert ist.
3. Die Oberflächentemperaturen des Aufbaus dürfen, mindestens auf einer Seite, einen entsprechend tiefen Wert nicht überschreiten. Diese Forderung ist eine Folge des Wunsches, den Leuchtkörperaufbau in unmittelbarer Nähe einer Wand oder einer Decke montieren zu können. Sie wird noch verschärft, wenn verlangt wird, dass ein Benutzer der den Leuchtkörperaufbau an einer beliebigen Stelle der Oberfläche während weniger Sekunden berührt, zwar den Eindruck einer sehr störend heissen Fläche empfindet, sich aber nicht verbrennen darf. Dies erfordert entweder die Verwendung "kühler" Lichtquellen oder den Einsatz eines "Hitzeschildes", der aber die Forderung nach Flachheit des Leuchtkörperaufbaus nicht verletzen darf.
4. In beleuchtungstechnischer Hinsicht muss der Leuchtkörperaufbau den folgenden Anforderungen genügen :
   - Der Leuchtkörperaufbau soll die Lichtquelle(n) beinhalten, d.h. das Licht soll nicht per Lichtleiter von externen Lichtquellen zugeführt werden.
   - Die von der oder den Lichtquelle(n) gesamthaft abgegebene Lichtmenge muss beginnend bei einigen wenigen Lumen bis hin zu mindestens 2000 Lumen (vorzugsweise aber mehr) betragen können.
   - Das Licht soll zur Erhaltung der klaren Transparenz vorzugsweise nicht aus den grossen Flächen des Leuchtkörperaufbaus austreten, sondern im Wesentlichen nur aus den Kanten mit der geringsten Dimension. Es soll dem Benutzer der Leuchte jedoch ermöglicht werden, an definierten Stellen Licht auch in der Senkrechten zu den grossen Flächen austreten lassen zu können.
   - Das Licht soll in mindestens zwei unterschiedlichen Richtungen gleichzeitig aus den Kanten austreten können und so, bei entsprechender Montage des Leuchtkörperaufbaus, beispielsweise eine gleichzeitige Anstrahlung der Decke zur Erzeugung indirekten Lichtes und eine direkte Beleuchtung eines unterhalb des Leuchtkörperaufbaus befindlichen Gegenstandes ermöglichen.
   - Die Qualität des austretenden Lichtes soll hinsichtlich Abstrahlwinkel, Diffusion und Farbe - mindestens vom Hersteller des Leuchtkörperaufbaus, möglichst in Teilaspekten aber auch vom Benutzer - einstellbar sein.
   - Der Leuchtkörperaufbau soll so gestaltet sein, dass er - nach Einbau in eine entsprechend aufgebaute Halterung- auf einfache Weise so verdreht werden kann, dass die mittlere Richtung des austretenden Lichtes einstellbar ist.
   - Der Leuchtkörperaufbau soll so gestaltet sein, dass der Leuchtkörper ohne Einbusse an Lichteffizienz in den entsprechenden Halterungen einer Deckenleuchte oder Pendelleuchte oder Wandleuchte oder Stehleuchte einsetzbar ist.

Nach dem Stand der Technik sind in der Reklamebranche Lichtleitscheibenanordnungen bekannt, mittels welcher durch den Einsatz von flachen, klar transparenten Scheiben - oft aus Plexiglas - Leuchtzeichen erzeugt werden. Die Leuchtzeichen sind als Gravuren, Ätzungen oder Farbaufträge auf der Fläche der Scheibe vorhanden und koppeln Licht aus der Scheibe aus, welches durch eine seitliche Kante der Scheibe eingekoppelt wurde. In den meisten Fällen ist die der "Einkopplungskante" gegenüberliegende Kante der Scheibe so gestaltet, dass sie das vom Innern der Scheibe her auftreffende Licht zu einem möglichst grossen Teil wieder in die Scheibe zurück reflektiert, um eine grössere Helligkeit der Leuchtzeichen zu erreichen. In manchen Fällen, in denen derartige Scheiben im Bewegungsbereich der Betrachter angeordnet sind, wird ein Teil des Lichtes durch die exponierten Kanten so ausgekoppelt, dass diese leuchten und so den Gefahrenbereich markieren. Die geschilderten Reklame-Leuchtscheiben weisen eine gewisse Ähnlichkeit mit dem in der vorliegenden Erfindung geschilderten Aufbau auf. Sie unterscheiden sich aber wesentlich, indem ihr primärer Zweck die (kostengünstige und ästhetisch durchaus hochstehende) Erzeugung von Leuchtzeichen ist und nicht die Beleuchtung des umgebenden Raumes. Zudem dürfen die Scheiben nicht weitestgehend transparent für den Betrachter wirken, weil sie sonst ihrem Verwendungszweck, der optischen Übermittlung von Information, nicht gerecht würden.

In einem Patent der Firma Willing GmbH, Scheßlitz, (DE 19701132A1) wird eine Lichtleitscheibenanordnung beschrieben, die dem in der vorliegenden Erfindung geschilderten Ausführungsbeispiel in Teilaspekten ähnlich ist. Von einer Lichtquelle wird Licht in eine Kante der Lichtleitscheibenanordnung eingekoppelt und teilweise durch die gegenüberliegende Kante vor allem aber auch durch die Flächen wieder ausgekoppelt. Ein wesentliches Unterscheidungsmerkmal gegenüber dem in der vorliegenden Erfindung geschilderten Aufbau ist die, von Willing gewollte, grossflächige Auskoppelung von Licht durch die Flächen. Das hauptsächliche Unterscheidungsmerkmal liegt jedoch darin, dass die von Willing geschilderte Lichtleitscheibenanordnung ausschliesslich zur Hinterleuchtung von grossflächigen, lichtstreuenden Abschlussflächen, welche die Lichtleitscheibenanordnung "umhüllen", und nicht zur direkten Raumbeleuchtung gedacht ist.

1998 wurde von der Firma Zumtobel Staff eine Pendelleuchte ("AERO") zur Allgemeinbeleuchtung grosser Räume vorgestellt, welche einen neuartigen, relativ flachen Leuchtkörperaufbau (Höhe ca. 4 cm) beinhaltet. Bei diesem Aufbau wird das Licht zweier horizontal angeordneter Leuchtstoffröhren direkt und über einen Reflektor zu einem grossen Teil (min. 76%) an die Raumdecke gelenkt, um so eine Indirektbeleuchtung zu erzielen. Das restliche Licht (max. 24%) wird über die seitlichen Kanten in eine spezielle, zwischen den Leuchtstoffröhren angeordnete, ca. 2.5 cm dicke (und ca. 20 x 120 cm grosse) Lichtleitplatte eingekoppelt und von dieser mittels - über die gesamte Fläche der Lichtleitplatte wabenartig angeordneter - Pyramidenstrukturen nach unten direkt in den zu beleuchtenden Raum ausgekoppelt. Durch die Kanten der Lichtleitplatte wird kein Licht ausgekoppelt.

Ein sehr ähnlicher Aufbau, der sich folglich wie oben beschrieben von der vorliegenden Erfindung unterscheidet, wird in einem Patent der Firma Siemens Beleuchtungstechnik GmbH & Co. KG, Traunstein, DE (EP 0846915A1) beschrieben. Weitere ähnliche Aufbauten mit entsprechenden Unterscheidungsmerkmalen finden sich in den Patenten WO 98/14740, WO 98/02690, EP 0800036A1, EP 0879991A2, DE 19605371A1, DE 19630455A1, DE 19605408A1 und US 5876107 (welches letztere zahlreiche entsprechende Referenzen enthält) und schliesslich als ein Beispiel zahlreicher Patente, die sich auf scheibenförmige Lichtquellen zur Hinterleuchtung von Scannern, Kopiergeräten usw. beziehen , US 5810464.

Die Aufgabe der vorliegenden Erfindung ist es, einen Leuchtkörperaufbau mit lichtleitenden Körpern zu schaffen, welcher den Eingangs der Beschreibung detailliert dargestellten Anforderungskatalog vollumfänglich erfüllt und der sich von den bekannten Aufbauten wesentlich dadurch unterscheidet, dass er zentral in die lichtleitenden Körper eingekoppeltes Licht an peripher gelegenen Kanten derselben wieder auskoppelt, womit die Lichteintritts- und/oder die Lichtaustrittszonen der lichtleitenden Körper als, die Qualität des Lichtes beeinflussende, optische Elemente verwendbar sind.

Diese Aufgabe wird erfindungsgemäss durch die kennzeichnenden Merkmale des Patentanspruches 1 gelöst. Vorteilhafte Weiterbildungen der Erfindung ergeben sich nach den Merkmalen der abhängigen Patentansprüche.

Der erfindungsgemässe Leuchtkörperaufbau ist so ausgebildet, dass das Licht einer oder mehrerer, nahe des Zentrums des Leuchtkörperaufbaus angeordneten(r) Lichtquelle(n) zu einem möglichst grossen Teil in klar transparente, platten- bzw. schalenförmige, lichtleitende Körper (Dicke maximal ca. 20 mm, vorzugsweise aber ca. 10 mm und weniger) einkoppelt und zu mindestens einer - bezüglich des gesamten Leuchtkörperaufbaus peripher gelegenen - Kante wieder auskoppelt. Dabei sind die lichtleitenden Körper, zumindest im Falle der Verwendung heller und heisser Lichtquellen (z.B. 100 Watt Niedervolt-Halogenlampen), wegen der durch hohe Temperaturunterschiede erzeugten Spannungen als mindestens zweiseitig neben der(n) Lichtquelle(n) angeordnete, getrennte Körper ausgebildet. Als Lichtquelle(n) wird(werden) vorzugsweise volumenmässig möglichst kleine Lampen verwendet, deren Durchmesser kleiner als 20 mm ist, die aber bei Bedarf bis zu einigen 100 mm Länge aufweisen dürfen. Auf dem Weg von der Lichteintrittszone zu der als Lichtaustrittszone wirkenden Kante tritt vorzugsweise kein Licht aus den klar transparenten, lichtleitenden Körpern aus, womit dieselben dem Betrachter als nur an definierten Stellen der Kanten leuchtende und Licht abstrahlende, ansonsten nahezu körperlose Gebilde erscheinen. Durch eine entsprechende Gestaltung der Form bzw. der Rauheit der Lichteintritts- und/oder Lichtaustrittszone(n) und durch eine Beschichtung dieser Zone(n) mit entsprechenden transparenten Hilfsstoffen ist die Qualität des austretenden Lichtes hinsichtlich Abstrahlwinkelbereich, Lichtverteilung, Diffusion und Farbe vom Hersteller des Leuchtkörperaufbaus in einem weiten Bereich einstellbar. In der Richtung der Dicke der lichtleitenden Körper wird/werden die Lichtquelle(n) von nicht transparenten oder teilweise transparenten, allenfalls zweilagig angeordneten Abdeckkörpem geringer Bauhöhe so abgedeckt, dass erstens ein Schutz gegen möglicherweise platzende Lampen gegeben ist, dass zweitens kein - oder eine definierte Menge - Licht in dieser Richtung aus dem Leuchtkörperaufbau austritt und dass drittens - im Falle heisser Lichtquelle(n) - die Wärme an der Aussenseite des Leuchtkörperaufbaus so gering ist, dass keine Verbrennungsgefahr existiert und dass der Leuchtkörperaufbau in unmittelbarer Nähe brennbarer Materialien montierbar ist. Zur Steigerung der Lichtausbeute können Abdeckkörper so als Reflektoren gestaltet sein, dass diese einen möglichst grossen Teil des von ihnen reflektierten Lichts ins Innere der lichtleitenden Körper umlenken. Eine alternative oder ergänzende Möglichkeit zur Steigerung der Lichtausbeute ist das Anbringen zusätzlicher optisch wirksamer Elemente - wie Zylinderlinsen, prismatischer Glaskörper oder ebener Spiegel - im Einkopplungsbereich.

Ein erfindungsgemässes Ausführungsbeispiel wie auch weitere Vorteile der Erfindung sind nachfolgend anhand der Figuren 1 - 7 näher erläutert. Es zeigen:
- Fig. 1: die perspektivische Ansicht eines Leuchtkörperaufbaus mit einer Niedervolt Halogenlampe als Lichtquelle
- Fig. 2: den perspektivischen Schnitt durch den Leuchtkörperaufbau mit Abdeckkörpem
- Fig. 3: die Ansicht des Leuchtkörperaufbaus mit Vorrichtungen zur Verbesserung des Wirkungsgrades der Lichteinkopplung und zwar :
a mit einem als Reflektor gestalteten Abdeckkörper
b mit ebenen Spiegeln im Einkopplungsbereich
- Fig. 4: die perspektivische Ansicht eines Leuchtkörperaufbaus mit einer länglichen Leuchtstoffröhre als Lichtquelle
- Fig. 5: die perspektivische Ansicht eines Leuchtkörperaufbaus mit LED-Anordnungen oder LEP-Streifen als Lichtquelle(n)
- Fig. 6: Beispiele unterschiedlicher Gestaltungen der lichtleitenden Körper
- Fig. 7: Prinzipskizze eines mehrschichtigen, reliefartigen Leuchtkörperaufbaus

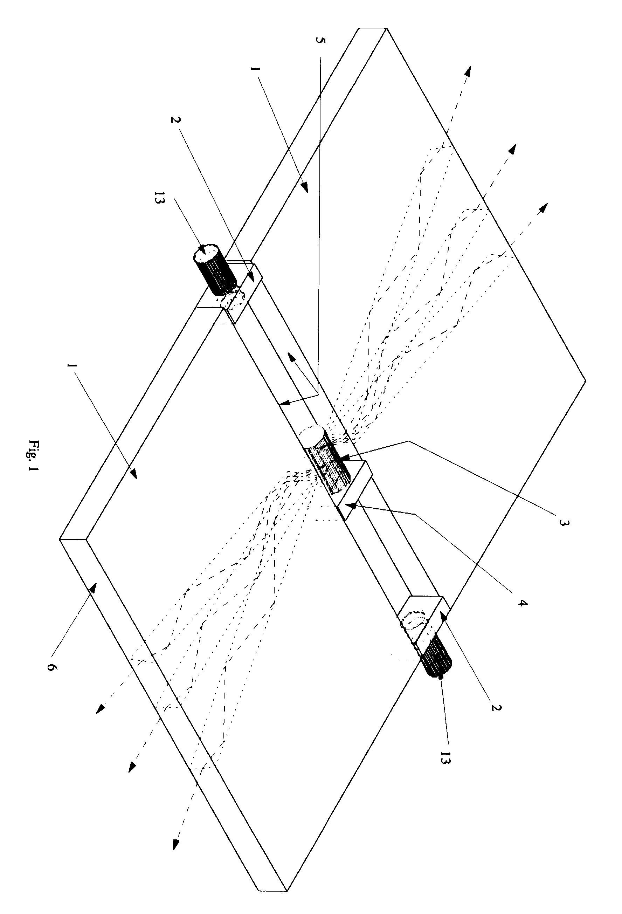

Die in Fig. 1 dargestellte Möglichkeit des Leuchtkörperaufbaus beinhaltet zwei einzelne Glasscheiben als lichtleitende Körper 1 , welche von Glasverbindern 2 so zusammengehalten werden, dass die beiden lichtleitenden Körper 1 durch einen Spalt konstanter Breite voneinander getrennt sind. Die an den Glasverbindem 2 angebrachten Zapfen 13 symbolisieren eine immer gleichbleibende Befestigungsvorrichtung mittels welcher der Leuchtkörperaufbau in Halterungen unterschiedlichster Art einbaubar ist. In dem zwischen den beiden lichtleitenden Körpern 1 vorhandenen Spalt wird eine Lichtquelle 3- hier z.B. eine 100 Watt Niedervolt- Halogenlampe - von einer für derartige Lampen geeigneten Standardfassung 4 gehalten. Die Dicke der lichtleitenden Körper 1 entspricht ca. dem Durchmesser der verwendeten Halogenlampe 3 und beträgt im Beispiel ca. 10 mm. Die Breite des Spaltes zwischen den beiden lichtleitenden Körpern 1 ist so gewählt, dass die beiden innen liegenden, die Lichteintrittszone 5 bildenden Kanten der lichtleitenden Körper 1 so dicht wie möglich bei der Lichtquelle 3 liegen, wobei im Beispiel der minimale Abstand ( hier ca. 12 mm) von der maximal zulässigen lokalen Temperatur des verwendeten Glases bestimmt ist. Das Licht der Lichtquelle 3 koppelt zu einem, vom Verhältnis Glasdicke / Glasabstand bestimmten, Prozentsatz (hier ca. 25 %) durch die, die Lichteintrittszone 5 bildende Kante in die lichtleitenden Körper 1 ein, wird mittels Totalreflektion durch dieselben transportiert und tritt aus der, die Lichtaustrittszone 6 bildende Kante wieder aus.

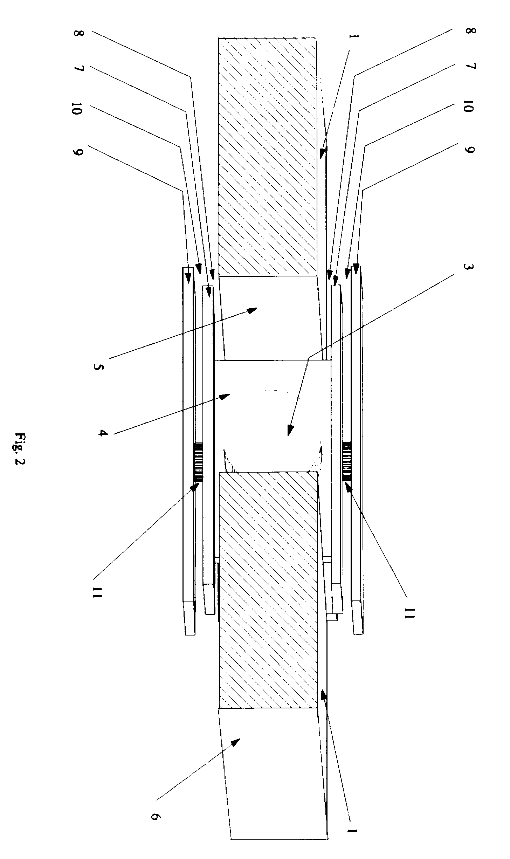

Das restliche Licht wird im Wesentlichen rechtwinklig zur Ausdehnung des lichtleitenden Körpers 1 direkt in den Raum abgestrahlt. Da diese Abstrahlung im Prinzip nicht erwünscht ist, wird - wie in Fig. 2 verdeutlicht - der Bereich oberhalb und unterhalb der Lichtquelle von Abdeckkörpem 7, 9 abgedeckt. Zur Gewährleistung einer genügend grossen Kühlung der Niedervolt-Halogen Lichtquelle 3 , sind die Abdeckkörper mittels Abstandhaltern 11 so montiert, dass entsprechende Luftspalte 8, 10 eine freie Zirkulation der Luft ermöglichen.

Neben der Verhinderung einer unerwünschten Lichtabstrahlung erfüllen die Abdeckkörper 7, 9 zwei weitere Anforderungen. Erstens verhindert der innere Abdeckkörper 7 ein ungebremstes Austreten von Glassplittern bei einem allfälligen Platzen der als Lichtquelle 3 eingesetzten Niedervolt-Halogen Lampe. Zweitens weist schon der innere Abdeckkörper 7 gegenüber der Oberfläche der Lichtquelle 3 eine deutlich reduzierte Temperatur an der äusseren Oberfläche auf. Diese Temperaturreduktion ist abhängig von der Materialwahl und von allfälligen, infrarot reflektierenden Schichten auf der Innenseite des Abdeckkörpers 7. Je nach Ausführung des inneren Abdeckkörpers 7 (z.B. Mattglas mit Infrarotfilter) liegt deren Aussentemperatur bereits tief genug, so dass dann auf den äusseren Abdeckkörper9 verzichtet werden kann. Bei anderen Ausführungen (z.B. Aluminium) ist die Aussentemperatur des inneren Abdeckkörpers 7 noch so hoch, dass erst der äussere Abdeckkörper 9 und der zusätzliche, trennende Luftspalt 10 die gewünschte Temperaturreduktion gewährleistet.

Die Fixierung der Abdeckkörper 7, 9 an den Abstandhaltern 11 ist so ausgeführt, dass dieselben "mit einem Handgriff" vom Benutzer abgenommen werden können. Dies erleichtert einerseits den allfälligen Wechsel der Lichtquelle, und eröffnet anderseits die Möglichkeit zwischen Abdeckkörpern mit unterschiedlichen optischen Eigenschaften zu wechseln. So ist in einem ersten Anordnungsbeispiel, der innere Abdeckkörper 7 aus (mehr oder weniger) diffus streuendem Glas gefertigt, während der äussere Abdeckkörper metallisch ist. Diese Anordnung ermöglicht es dem Benutzer Licht nur aus den Austrittszonen 6 der lichtleitenden Körpern 1 austreten zu lassen, gibt ihm aber auch die Freiheit, das im Wesentlichen rechtwinklig zu den lichtleitenden Körpern 1 aus der Lichtquelle 3 austretende Licht durch entsprechendes Entfernen der äusseren Abdeckkörper 9 in einer oder in zwei entgegengesetzten Richtungen in den Raum austreten zu lassen ohne dass gesamthaft die geforderten Schutzfunktionen der Abdeckkörper verloren gehen. In einem zweiten Anordnungsbeispiel können die Abdeckkörper 7 und 9 als Glasscheiben ausgebildet sein, welche je mit einer das Licht polarisierenden Schicht versehen sind. Für den Benutzer wird durch eine entsprechende Verdrehung des äusseren Abdeckkörpers 9 der Austritt von Licht in der zu den lichtleitenden Körpern 1 senkrechten Richtung zwischen nahezu hell und nahezu dunkel stufenlos variierbar.

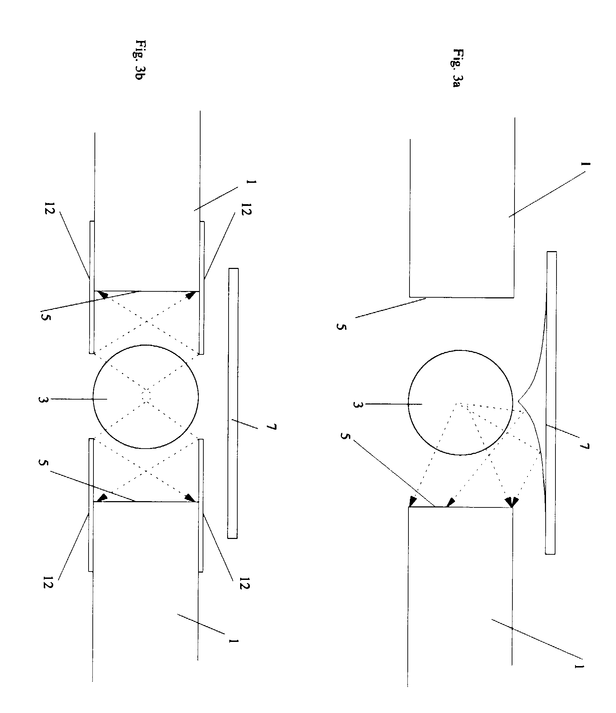

Der prozentuale Anteil des in die lichtleitenden Körper 1 eingekoppelten Lichtes beträgt im beschriebenen Ausführungsbeispiel nur ca. 25%. Dieser - im Sinne der eigentlich gewünschten Anwendung des Leuchtkörperaufbaus - geringe Wirkungsgrad (Verhältnis des in die lichtleitenden Körper eingekoppelten Lichtes zu dem total von der Lichtquelle abgestrahlten Licht) kann, bei gleichbleibenden Dimensionen, wesentlich erhöht werden. Fig. 3 zeigt entsprechende Möglichkeiten.

Wie in Fig. 3a dargestellt, ist es möglich, eine Erhöhung des Wirkungsgrades bis theoretisch ca. 55% - zu erzielen, indem der innere Abdeckkörper 7 auf seiner der Lichtquelle 3 zugewandten Seite als doppelseitig hohlspiegelartiges Element ausgebildet ist. Diese Anordnung bringt den weiteren Vorteil eines verbesserten Kühlluftstromes, indem allfällige, an ebenen Abdeckkörpem in Horizontalstellung auftretende, Stauzonen vermieden werden.

Eine sehr einfach zu realisierende Verbesserung des Wirkungsgrades - theoretisch auf ca. 45% - ist in Fig. 3b dargestellt. In der Einkopplungszone werden hierzu oberhalb und unterhalb der lichtleitenden Körper 1 angeordnete, innenseitig verspiegelte Flächen 12 angeordnet, welche sich bis nahe an die Lichtquelle 3 erstrecken und aus Gründen einer guten Luftzirkulation in Längsrichtung der Lichtquelle 3 so kurz wie möglich (hier ca. 5 - 10 mm) sind. Durch diese Anordnung wird offensichtlich der maximale Einkopplungswinkel vergrössert und damit der Wirkungsgrad stark erhöht.

Es ist leicht einsehbar, dass eine geeignete Kombination der in Fig. 3a und 3b dargestellten Fälle eine weitere Verbesserung - bis ca. 65% - des Wirkungsgrades ergibt. Weiter ist einsehbar, dass andere entsprechende Aufbauten zur Erhöhung des Wirkungsgrades möglich sind.

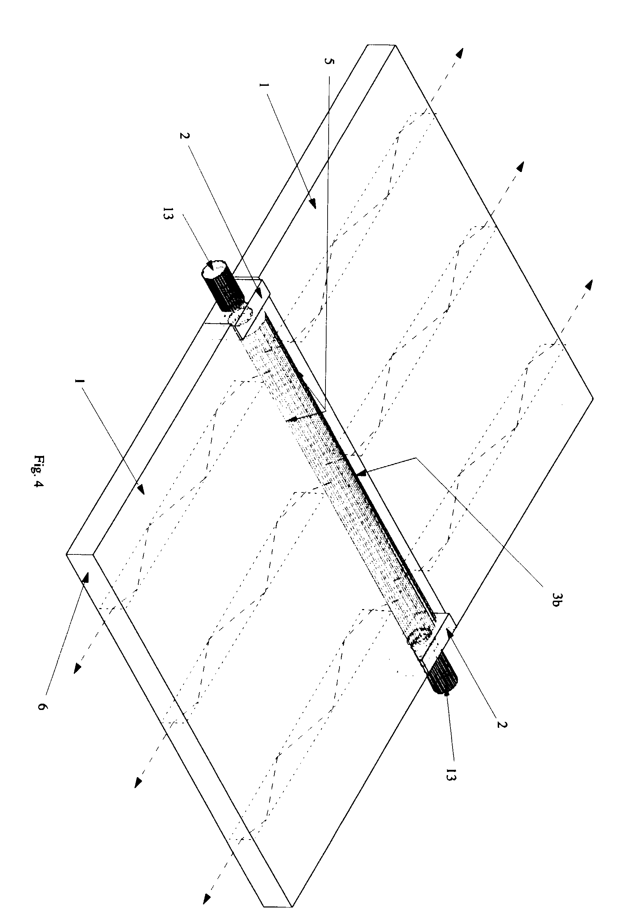

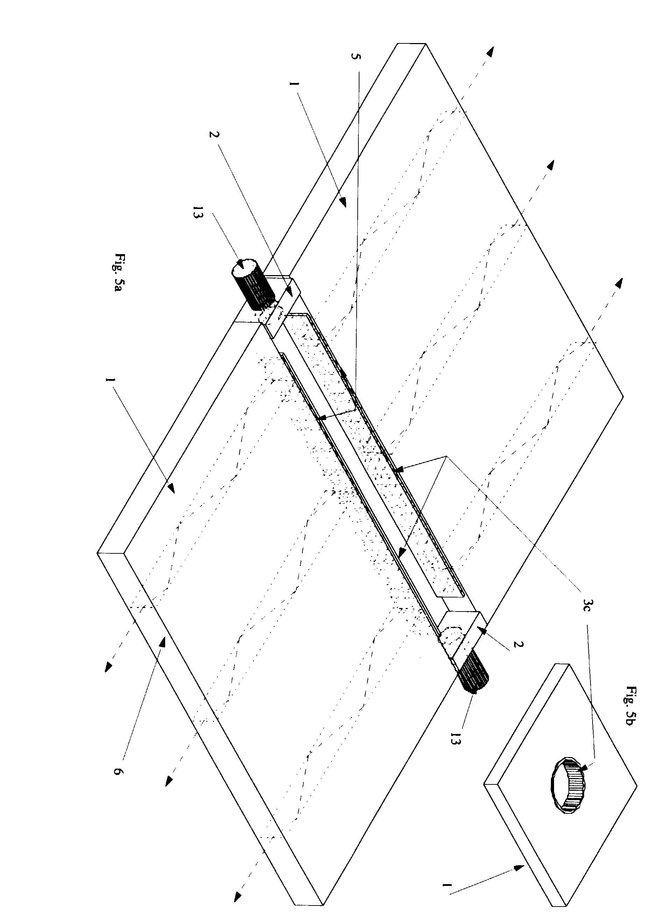

Der beschriebene Aufbau geht von einer Niedervolt Halogenlampe als Lichtquelle 3 aus. Diese Lampen bieten den Vorteil eines kleinen Volumens, erzeugen aber sehr hohe Temperaturen ( > 300°C) in ihrer unmittelbaren Umgebung, was die oben besprochenen, relativ aufwendigen Abschirmmassnahmen notwendig macht. Der Anforderungskatalog kann auch mit anderen, relativ kühlen Lichtquellen 3 erfüllt werden. Fig. 4 zeigt das schematische Beispiel eines Aufbaus mit einer Leuchtstoffröhre 3b. Diese Art von Lichtquelle wird heute in Kompaktbauweise angeboten ( z.B. OSRAM FM mit Ø 7 mm und Länge ab ca. 200 mm). so dass sie auch die Forderung nach einer flachen Bauweise ermöglicht. Fig. 5 zeigt weitere, hochinteressante Möglichkeiten. Als Lichtquelle wird mindestens eine, allenfalls flexible, LED-Anordnung 3c verwendet, welche zahlreiche LED (Licht emittierende Dioden) beinhaltet und elektrisch kontaktiert. Alternativ zu einer LED-Anordnung ist auch der Einsatz mindestens eines LEP-Streifens (Licht emittierende Polymere, Leuchtfolie) möglich. LED bieten den Vorteil einer hohen Lebensdauer, einer geringen Betriebstemperatur, einer extrem flachen Bauweise und sie sind in nahezu allen Farben, inklusive weiss, erhältlich. Neben der in Fig. 4a dargestellten Möglichkeit eröffnet dies Aufbauten gemäss Fig. 5b, bei welchen mindestens eine flexible LED-Anordnung 3c (oder mindestens ein LEP-Streifen) in lochartigen Öffnungen in der Gegend des Zentrums eines lichtleitenden platten- oder schalenförmigen Körpers 1 so angeordnet ist, dass das Licht der LED zu einem möglichst grossen Anteil durch die als Lichteintrittszone 5 wirkende Kante in den lichtleitenden Körper 1 einkoppelt. Dank der Kleinheit der einzelnen Lichtquellen und der durch die vergleichsweise geringen Temperaturen gegebenen Möglichkeit diese sehr dicht bei dem lichtleitenden Körper 1 zu befestigen, sind in einem solchen Aufbau Einkopplungsgrade von nahezu 100% erreichbar. Die Tatsache, dass LED in fast allen Farben erhältlich sind, bietet die Möglichkeit einer vom Benutzer beliebig einstellbaren Farbmischung. Ein Gemisch aus beispielsweise weissen, blauen, gelben und roten LED kann derart auf der LED-Anordnung 3c befestigt und kontaktiert sein, dass die einzelnen Farben getrennt dimmbar sind und dass das gesamthaft abgegebene Licht für die jeweiligen Bedürfnissen anpassbar ist.

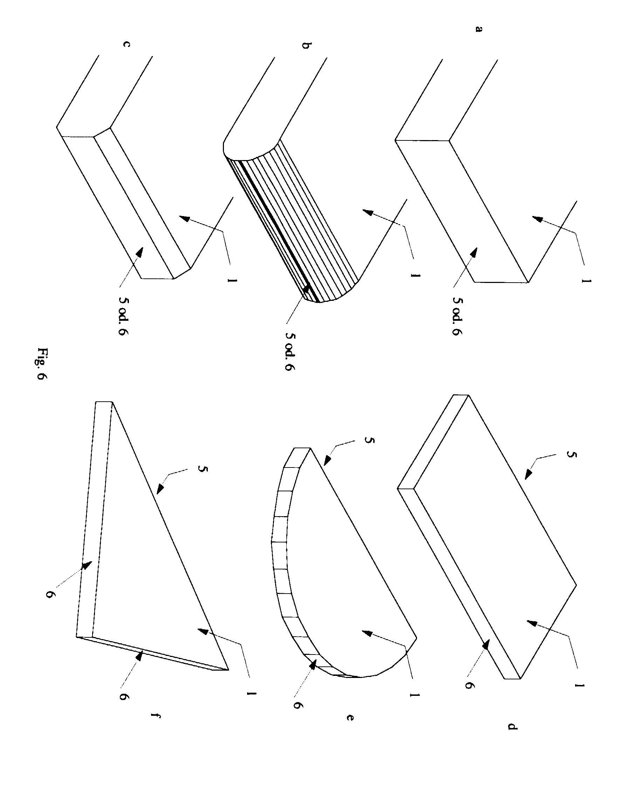

Neben der geschilderten Möglichkeit die Farbe des Lichtes durch den Einsatz mehrerer farblich unterschiedlicher, getrennt dimmbarer Lichtquellen einzustellen, macht die Tatsache, dass beim erfindungsgemässen Leuchtkörperaufbau das Licht die Lichteintrittszone 5 und die Lichtaustrittszone 6 eines lichtleitenden Körpers 1 passieren muss, für den Hersteller die Qualität des abgestrahlten Lichtes hinsichtlich Abstrahlwinkelbereich, Diffusion und Lichtfarbe beeinflussbar. Fig. 6 zeigt Beispiele unterschiedlicher Kantenformen bzw. unterschiedliche Gesamtformen der lichtleitenden Körper 1 , welche jeweils deutlich unterschiedliche Bereiche von Abstrahlwinkeln ergeben. So ergibt sich mit der Kantenform von Fig. 6a (ebene Fläche mit scharfen Kanten ) in der Ebene senkrecht zur Kante ein Abstrahlwinkel, der dem Winkel entspricht, welcher vom Abstand der Lichtquelle 3 von der Lichteintrittszone 5 einerseits und von der Dicke des lichtleitenden Körpers 1 anderseits definiert wird. In diesem Winkelbereich ergibt sich darüber hinaus eine nahezu gleichmässige Verteilung der Lichtintensität. Die Kantenform von Fig. 6b (halbkreisförmiger Querschnitt) ergibt entsprechend einen als deutlich kleiner empfundenen Abstrahlwinkel, sodass in der Ebene senkrecht zur Lichtaustrittszone eine Verteilung der Lichtintensität entsteht, die im zentralen Bereich sehr hoch ist und gegen grössere Winkel hin im Sinne einer Gaussverteilung abnimmt. Die in Fig. 6c gezeigte Kantenform ergibt in der Ebene senkrecht zur Kante einen gegenüber Fig. 6a vergrösserten Abstrahlwinkel, innerhalb dessen eine deutlich uneinheitliche, helle und dunkle Streifen aufweisende Intensitätsverteilung vorhanden ist. Offensichtlich ist eine solche Lichtverteilung beispielsweise für eine Leseleuchte nicht brauchbar; sie kann aber im Sinne einer Raumaktivierung durchaus von Interesse sein.

Zusätzlich zur Möglichkeit die Abstrahlung des Lichtes bezüglich Winkel und Intensitätsverteilung in der Ebene senkrecht zur Kante mittels der Kantenform zu beeinflussen, kommt die Möglichkeit, eine ähnliche Beeinflussung der Abstrahlung in der Ebene des lichtleitenden Körpers 1 durch die Gesamtform desselben zu erreichen. Die in den Figuren 6d, 6e, 6f gezeigten Beispiele von möglichen Gesamtformen der lichtleitenden Körper 1 , ergeben jeweils in der Ebene der lichtleitenden Körper 1 deutlich unterschiedliche Abstrahlungsbereiche des Lichtes. Eine weitere wichtige Möglichkeit der Beeinflussung der Lichtqualität ergibt sich durch die Rauheit der Lichtaustrittszone 6 . Im Gegensatz zur Lichteintrittszone 5, die eines möglichst guten Einkopplungsverhaltens wegen immer klar transparent sein sollte, darf die Lichtaustrittszone mit geeigneten Methoden wie Schleifen, Ätzen oder Beschichten in einem gewünschten Masse rauh und damit diffus streuend gemacht werden. Damit wird beispielsweise ein Blendeffekt, der bei klar transparenter Lichtaustrittszone 6 auftreten kann, deutlich reduziert. Zusätzlich kann ein Homogenisieren der Verteilung der Lichtintensität innerhalb eines bestimmten Winkelbereichs erreicht werden.

Neben der oben geschilderten Möglichkeit der Beeinflussbarkeit der Lichtfarbe durch ein Gemisch von Lichtquellen unterschiedlicher Farbe, besteht für den Hersteller des erfindungsgemässen Leuchtkörperaufbaus zusätzlich eine Variationsmöglichkeit der Lichtfarbe durch eine entsprechende Beschichtung der Lichteintrittszone 5 und/oder der Lichtaustrittszone 6. So besteht beispielsweise die Möglichkeit eine dünnfilmmässige Beschichtung im Sinne marktüblicher optischer Filtersysteme vorzunehmen (bzw. vornehmen zu lassen), um damit bestimmte - allfällig störende - Wellenlängen des von der eingesetzten Lichtquelle 3 ausgesandten Lichtes zu unterdrücken. Im Weiteren besteht prinzipiell die Möglichkeit eine Beschichtung mit sekundär emittierenden (transparenten) Farbstoffen (laser dyes, fotoaktiver Phosphor) vorzunehmen und so eine Umwandlung kurzwelligen Lichtes (ultraviolett bis blau) in längerwelliges Licht durchzuführen.

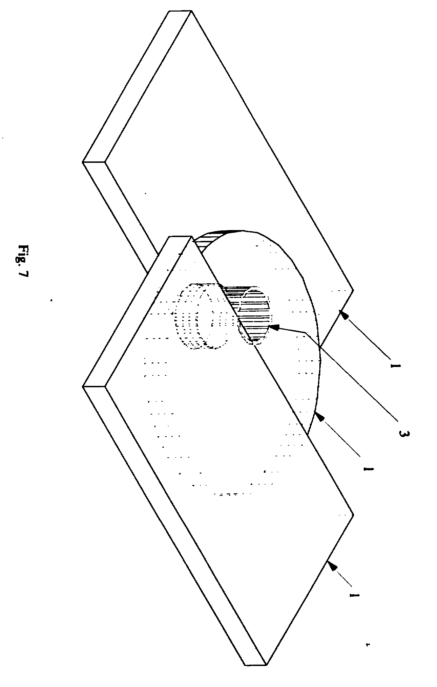

Die bisher geschilderten Möglichkeiten beschränken sich auf einlagige Leuchtkörperaufbauten bei denen unterschiedliche Arten von Lichtquellen kombiniert mit platten- bzw. schalenförmigen lichtleitenden Körpern eingesetzt werden. Fig. 7 deutet eine -beliebig variierbare - Möglichkeit an, einen mehrlagigen Leuchtkörperaufbau zu gestalten, bei dem das Licht einer oder mehrerer, gleichartiger oder unterschiedlicher, zentral gelegener Lichtquellen 3 in mehrere geschichtete lichtleitende Körper 1 eingekoppelt wird und jeweils zu peripheren Zonen wieder austritt. Die sich auf diese oder ähnliche Art ergebenden gestalterischen Möglichkeiten und die erzielbaren Beleuchtungseffekte sind vielfältig und eröffnen eine Grosszahl von neuen Möglichkeiten der Beleuchtung und/oder Aktivierung von Räumen.

## Patentansprüche

1. Leuchtkörperaufbau umfassend mindestens einen lichtleitenden Körper mit einer Lichtleitzone, mit mindestens einer, dem Zentrum des Leuchtkörperaufbaus naheliegenden, Lichtquelle, dadurch gekennzeichnet, dass der lichtleitende Körper klar transparent und platten- bzw. schalenförmig ist, das Licht der Lichtquelle zu einem möglichst grossen Teil durch mindestens eine dem Zentrum des Leuchtkörperaufbaus naheliegende Lichteintrittszone einkoppelt und durch mindestens eine bezüglich des gesamten Leuchtkörperaufbaus peripher angeordnete, als Lichtaustrittszone wirkende, Kante wieder auskoppelt.

2. Leuchtkörperaufbau nach Anspruch 1, dadurch gekennzeichnet, dass die Qualität des austretenden Lichtes hinsichtlich Abstrahlwinkelbereich, Verteilung der Lichtintensität, Diffusion und Lichtfarbe von der Form, Oberflächenrauheit und Oberflächenbeschichtung der Lichteintrittszone(n) und/oder der Lichtaustrittszone(n) des(r) lichtleitenden Körper(s) definiert ist.

3. Leuchtkörperaufbau nach Anspruch 1, dadurch gekennzeichnet, dass im Bereich der Lichteintrittszone(n) optische Elemente vorhanden sind, die dafür sorgen, dass ein möglichst grosser Teil des von der Lichtquelle bzw. den Lichtquellen abgegebenen Lichts durch die Lichteintrittszone(n) in die Lichtleitzone(n) einkoppelt.

4. Leuchtkörperaufbau nach Anspruch 1, dadurch gekennzeichnet, dass die Lichtquelle(n) in der Senkrechten zur Richtung der Lichtleitzone(n) von mindestens einem lichtundurchlässigen oder lichtdurchlässigen Abdeckkörper so abgedeckt wird(en), dass die Energie der Splitter einer platzenden Lichtquelle grösstenteils vernichtet wird und dass in dieser Richtung kein oder nur eine definierte Menge von Licht aus dem Leuchtkörper austreten kann.

5. Leuchtkörperaufbau nach Anspruch 4, dadurch gekennzeichnet, dass der Abdeckkörper derart als Reflektor gestaltet ist, dass er einen möglichst grossen Teil des von ihm reflektierten Lichts durch die Lichteintrittszone(n) in die Lichtleitzone(n) umlenkt.

6. Leuchtkörperaufbau nach Anspruch 4, dadurch gekennzeichnet, dass - im Falle einer und/oder mehrerer heissen(r) Lichtquelle(n) - erstens der bzw. die Abdeckkörper so angeordnet ist(sind), dass ein Luftspalt zur Kühlung der Lichtquelle(n) vorhanden ist, dass zweitens Abdeckkörper zweilagig so angeordnet sein können, dass ein zusätzlicher Luftspalt vorhanden ist, und dass drittens mindestens einer der Abdeckkörper lichtquellenseitig mit einer infrarotreflektierenden Schicht versehen sein kann, womit aussenseitig eine Temperatur sichergestellt ist, die keine Verbrennungsgefahr beinhaltet.

7. Leuchtkörperaufbau nach Anspruch 1, dadurch gekennzeichnet, dass Lichtquellen unterschiedlicher Farbe so angeordnet sind, dass erstens durch die Lichteintrittszone(n) und/oder die Lichtaustrittszone(n) ein Durchmischen der Farben geschieht und zweitens die Leuchtstärke der farblich unterschiedlichen Lichtquellen je separat veränderbar ist, so dass die Farbe des austretenden Lichts beliebig einstellbar ist.

8. Leuchtkörperaufbau nach Anspruch 1 oder 7, dadurch gekennzeichnet, dass als Lichtquelle zahlreiche kleine Lichtquellen, in der Grössenordnung von 0.05 bis 5 mm², beispielsweise ausgeführt mit als LED bezeichneten Licht emittierenden Dioden, mit geringer Helligkeit, in der Grössenordnung von 0.1 bis 10 Lumen pro kleiner Lichtquelle, verwendet werden, die allenfalls elektrisch so geschaltet sind, dass sie direkt mit einer gängigen elektrischen Spannung, beispielsweise mit 12 Volt oder 230 Volt, betreibbar sind und allenfalls so angeordnet sind, dass durch die Lichteintrittszone(n) und/oder die Lichtleitzone(n) und/oder die Lichtaustrittszone(n) ein Durchmischen erreicht wird, sodass an der/den Lichtaustrittszone(n) gesamthaft helles Licht, in der Grössenordnung von 500 bis 10·000 Lumen, austritt, wobei allenfalls die Farbe des austretenden Lichts einstellbar ist.

9. Leuchtkörperaufbau nach Anspruch 1, dadurch gekennzeichnet, dass transparente, lichtleitende Körper, allenfalls zusammen mit nicht lichtleitenden Körpern, so kombiniert sind, dass ein reliefartiges, mehrschichtiges Gebilde entsteht.
